(19) Europäisches Patentamt / European Patent Office / Office européen des brevets

(11) **EP 2 225 888 B1**

(12) **FASCICULE DE BREVET EUROPEEN**

(45) Date de publication et mention
de la délivrance du brevet:
**10.08.2011 Bulletin 2011/32**

(21) Numéro de dépôt: **08864150.1**

(22) Date de dépôt: **02.12.2008**

(51) Int Cl.:
**H04N 7/26** *(2006.01)*        **H04N 7/50** *(2006.01)*

(86) Numéro de dépôt international:
**PCT/FR2008/052175**

(87) Numéro de publication internationale:
**WO 2009/080928 (02.07.2009 Gazette 2009/27)**

(54) **PROCÉDÉ DE CODAGE DOUBLE PASSE PAR MACROBLOC**

AUF MAKROBLOCK BASIERENDES DOPPELKODIERVERFAHREN

MACROBLOCK-BASED DUAL-PASS CODING METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0760308**

(43) Date de publication de la demande:
**08.09.2010 Bulletin 2010/36**

(73) Titulaire: **Thomson Licensing**
**92130 Issy-les-Moulineaux (FR)**

(72) Inventeurs:
• **HIRON, Franck**
  **F-35220 Chateaubourg (FR)**
• **OLIVIER, Yannick**
  **F-35235 Thorigne Fouillard (FR)**
• **GUILLOTEL, Philippe**
  **F-35770 Vern Sur Seiche (FR)**

(74) Mandataire: **Ruellan-Lemonnier, Brigitte et al**
**Technicolor**
**1-5 rue Jeanne d'Arc**
**92130 Issy-les-Moulineaux (FR)**

(56) Documents cités:
**US-B1- 6 317 459**

• **MINQIANG JIANG ET AL: "On Lagrange multiplier and quantizer adjustment for H.264 frame-layer video rate control" IEEE TRANSACTIONS ON CIRCUITS AND SYSTEMS FOR VIDEO TECHNOLOGY IEEE USA, vol. 16, no. 5, mai 2006 (2006-05), pages 663-669, XP002502473 ISSN: 1051-8215**
• **JOCH A ET AL: "Rate-constrained coder control and comparison of video coding standards" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, juillet 2003 (2003-07), pages 688-703, XP011099260 ISSN: 1051-8215**
• **DONGMING ZHANG ET AL: "Fast Inter Frame Encoding Based on Modes Pre-Decision in H. 264" MULTIMEDIA AND EXPO, 2005. ICME 2005. IEEE INTERNATIONAL CONFERENCE ON AMSTERDAM, THE NETHERLANDS 06-06 JULY 2005, PISCATAWAY, NJ, USA,IEEE, 6 juillet 2005 (2005-07-06), pages 530-533, XP010842089 ISBN: 978-0-7803-9331-8**
• **WEI SUN ET AL: "An Effective Real-Time Rate Control Scheme for Video Codec" ADVANCED PARALLEL PROCESSING TECHNOLOGIES; [LECTURE NOTES IN COMPUTER SCIENCE], SPRINGER BERLIN HEIDELBERG, BERLIN, HEIDELBERG, vol. 4847, 22 novembre 2007 (2007-11-22), pages 460-467, XP019083244 ISBN: 978-3-540-76836-4**

## Description

## Domaine de l'invention

La présente invention se rapporte au domaine de la compression vidéo.

Elle concerne un procédé de codage selon plusieurs passes d'une séquence d'images vidéo, le codage s'effectuant par macrobloc d'image selon une norme MPEG, un critère débit-distorsion étant calculé pour un mode de codage lors de la première passe.

## Etat de la technique

Il est connu de l'art antérieur un procédé d'encodage double passe qui consiste à coder deux fois une séquence d'images vidéo.

Les procédés d'encodage exploitent, en particulier lorsqu'ils sont compatibles d'une norme MPEG, une régulation au niveau des GOP, à débit constant ou variable. Un GOP, acronyme de l'anglais Group Of Pictures, est un groupe d'images comprises entre 2 images de type intra, I ou IDR, définies dans les normes MPEG telles que MPEG2 ou MPEG4. Une mémoire ou buffer en sortie du codeur, généralement de la taille d'un GOP, permet de réguler le débit de sortie, absorbant les variations de débit entre images du fait de leur complexité variable.

En mode débit constant ou CBR, de l'anglais "constant bitrate", le taux de compression est constant et la qualité d'image varie. Si l'on veut une bonne qualité d'image sur l'ensemble de la séquence encodée, c'est-à-dire même sur les passages « difficiles » à coder correspondant à des images complexes, il est nécessaire d'utiliser un taux de compression faible sur toute la séquence permettant une qualité correcte pour ces passages difficiles à forts mouvements ou avec images très texturées. Cela veut dire que certaines scènes statiques seront encodées pour fournir un débit supérieur à ce qui aurait été nécessaire pour conserver une même qualité d'images. Il n'y a donc pas d'optimisation du coût de codage ou de la bande passante en fonction de la qualité des images. Ce mode de codage est utilisé par exemple dans des applications de diffusion par satellite ou par voie terrestre comme la Télévision Numérique Terrestre.

Le principe du débit variable ou VBR, de l'anglais Variable Bit Rate, est de garder si possible une qualité constante et de faire varier le taux de compression. Les scènes faciles à coder, par exemple les scènes statiques, sont donc codées avec un fort taux de compression et les scènes plus difficiles sont codées avec un taux de compression plus faible, en récupérant en quelques sortes le coût de codage ou débit économisé sur les scènes statiques. Cela nécessite de connaître le coût de codage des différentes scènes. Ce mode est utilisé par exemple pour des applications de stockage sur DVD (Digital Versatile Disc), à partir de PVR (Personal Video Recorder)...

L'avantage d'un procédé VBR double passe sur un procédé simple passe ou mono passe est la possibilité de « récupérer » du débit sur une scène pour l'attribuer à une autre.

En mode VBR simple passe, un buffer ou mémoire tampon de taille limitée est utilisé. Le codeur estime la difficulté de compression, c'est-à-dire le coût de codage des scènes ou images mémorisées dans cette mémoire et fait varier le taux de compression en fonction de cette information. Au final, le codeur ne peut compenser un taux de compression faible, associé à une scène animée, par un taux de compression élevé, scène statique, que si se trouvent simultanément en mémoire tampon ces deux scènes. Dans le cas contraire, s'il n'y a par exemple que des scènes complexes en mémoire, le codeur est obligé de faire varier la qualité des images, par exemple en augmentant le pas de quantification pour diminuer le débit.

Dans le cas d'un encodage en une seule passe, l'encodeur ne peut pas connaître à l'avance la complexité de l'image à encoder. Il fait donc des prédictions pour estimer le coût de codage des images suivantes. Cette prédiction est satisfaisante quand la séquence est stable. Elle ne peut pas anticiper des changements statistiques tels que les changements de plans.

Le mode VBR double passe exploite un premier et un deuxième codage d'une même image. La première passe est utilisée pour déterminer le débit nécessaire à l'encodage de chaque image. Ainsi, le débit peut être réparti entre les images en fonction du débit cible, qui est le débit moyen, de façon plus optimale qu'avec un encodeur simple passe qui ne possède pas d'information sur les images qui suivent.

Le mode VBR double passe, lorsqu'on ne travaille pas en temps réel, peut être considéré comme un mode VBR simple passe dont la mémoire tampon serait une mémoire de capacité illimitée et qui pourrait donc contenir la séquence ou le film dans sa totalité. Le codeur effectue une première passe pour estimer la difficulté de codage de l'ensemble des séquences du film à comprimer. Lors de la seconde passe, étape de compression proprement dite, l'algorithme de codage peut allouer un débit élevé à une scène dynamique au début du film sachant que ce surplus de débit pourra être récupéré par exemple lors d'une scène statique à la fin du film. Ceci parce qu'un scène statique a été détectée lors de la première passe.

Pour le codage en temps réel, les gains obtenus en capacité de traitement des circuits intégrés ont permis de réaliser du codage double passe dans des codeurs de type MPEG-2. Par contre, la complexité des nouveaux standards tels que H.264/AVC ne permet pas un tel codage double passe en temps réel, que ce soit dans des configurations matérielles (hardware) ou logicielles (software).

Une solution intermédiaire consiste en la mise en oeuvre d'un algorithme double passe simplifié exploitant une première passe effectuant un codage dont le mode est prédéfini. L'algorithme en deux passes « partiel », c'est-à-dire exploitant un codage partiel lors de la première passe, consiste par exemple en un codage en mode forcé intra des images lors de la première passe. Le codage en deux passes « complet » n'est généralement pas compatible d'un traitement temps réel.

Dans le cas d'un codage partiel, l'estimation est moins précise mais ce codage donne néanmoins certaines informations sur l'évolution de la

<Le document MINQIANG JIANG ET AL: "On Lagrange multiplier and quantizer adjustment for H.264 frame-layer video rate control", IEEE TRANSACTIONS ON CIRCUITS AND SYSTEMS FOR VIDEO TECHNOLOGY IEEE USA, vol. 16, no. 5, mai 2006 (2006-05), pages 663-669, ISSN: 1051-8215 se réfère particulierment à un procédé de codage double passe d'une séquence d'images vidéo, le codage s'effectuant par macrobloc d'image selon une norme MPEG, un algorithme de régulation régulant le débit par modification d'un pas de quantification de coefficients transformés d'un bloc d'image, la première passe effectuant un calcul des meilleurs modes de codage, pour un pas de quantification calculé par un algorithme de régulation première passe, en minimisant un critère débit-distorsion.> séquence. La première passe ne permet cependant pas d'évaluer la complexité réelle des images codées, c'est-à-dire celle correspondant aux modes de codage sélectionnés lors de la deuxième passe, le plus fréquemment les modes inter.

Dans un contexte de codage double passe, on cherche à utiliser les informations de la première passe pour optimiser la décision relative au mode de codage du macrobloc et non plus uniquement pour la régulation de débit. La décision du mode de codage d'un macrobloc se fait par exemple en fonction des deux critères suivants :

- la qualité de l'image, en termes de différence avec l'original, l'image source,
- le coût, en termes de débit.

La technique d'optimisation lagrangienne sur une fonction ou critère débit-distorsion permet une telle approche. C'est en minimisant l'équation (1) que l'on détermine le mode de codage :

$$ J = D + \lambda R \ (1) $$

avec :

- D, un paramètre de mesure de distorsion de l'image, inverse de la qualité, par exemple la somme de la valeur absolue des différences, pixel à pixel, entre l'image reconstruite ou recodée et l'image source, aussi appelée SAD pour Sum of Absolute Difference,
- R, un débit, une estimation ou coût réel de codage, par exemple en nombre de bits nécessaires à l'encodage,
- Lambda ($\lambda$), le paramètre lagrangien.

Dans un exemple, la valeur de $\lambda$ est calculée en utilisant une ($QP$-12)/3 formule empirique : $\lambda = 0.85 \times 2$ dans laquelle QP est le pas de quantification des coefficients DCT du macrobloc.

Le codage de la première passe est effectué à partir d'un certain nombre de paramètres, par exemple le pas de quantification. Or la valeur de ces paramètres, modifiée lors de la deuxième passe, est prise en compte pour la décision du mode de codage pour cette deuxième passe :

- la valeur de lambda dépend du pas de quantification (Qp),
- la mesure de qualité dépend de l'image décodée locale qui est différente lors de la deuxième passe.

La prise en compte d'un codage ne reflétant pas celui de la deuxième passe introduit un biais. La décision est prise lors de la première passe alors que l'environnement lors de la seconde passe, l'image décodée locale, la quantification... peut être différent.

Il n'est d'autre part pas réalisable d'effectuer l'ensemble de codages correspondant aux différents modes de codages possibles des macroblocs. En effet, le nombre de modes de codage par macrobloc est généralement très élevé.

Prenons l'exemple du standard H.264/AVC (les termes anglais correspondant de la norme sont précisés entre parenthèses):

- en mode Intra, il y a 9 prédicteurs par bloc 4x4 + 9 prédicteurs par bloc 8x8 + 4 prédicteurs par bloc 16x16
- en mode Inter type P, la prédiction peut être de type anticipée (forward prediction), différée (backward prediction), bidirectionnelle, le mode peut être de type direct (direct), de type sauté (skip), sur N images de référence possibles et pour 4 partitions de taille 16x16, 16x8, 8x16, 8x8, et éventuellement 3 sous-partitions de taille 8x4, 4x8, 4x4.

D'autre part, les images peuvent être codées en mode trame (field), avec des prédictions trame supérieure (top field) ou trame inférieure (bottom field) pour les deux trames, en mode bi-trame (frame), multipliant ainsi le nombre de prédictions par 5.

Enfin chaque macrobloc peut ensuite utiliser une transformée cosinus discrète soit sur un bloc de taille 4x4, soit sur un bloc de taille 8x8.

Pour une image de type P utilisant une seule référence (N=1), près de mille modes de codage sont possibles. En utilisant 3 références images, plus de cinq mille modes de codage sont possibles. Pour une image de type B ce nombre est encore plus important du fait de modes de codage supplémentaires tels que le mode bidirectionnel, le mode direct...

L'exploitation d'une première passe pour décider des paramètres de codage de la deuxième passe apporte un gain substantiel en termes de qualité et notamment sur la stabilité temporelle de la régulation de débit. Cependant, le fait de ne pas remettre en cause la décision de codage prise lors de la première passe est génératrice de pertes au niveau de la qualité, taux de compression ou débit. Le tableau ci-dessous correspond à des simulations et représente la perte qui peut être générée lorsque la décision de codage première passe n'est pas remise en cause.

Le calcul est effectué en réalisant un codage première passe exploitant un pas de quantification QP. On suppose ensuite que les résultats de cette première passe nécessitent un ajustement de ce pas de quantification pour le codage seconde passe. Le pas de quantification est ainsi modifié lors de la deuxième passe de façon uniforme sur toute l'image. Pour cette simulation, la régulation de débit n'est donc pas utilisée. Ce décalage par rapport au pas de quantification première passe peut correspondre à celui que déterminerait une régulation de débit pour atteindre une consigne de débit. Les ajustements pris en compte sont ici une simple et double décrémentation et incrémentation du pas de quantification.

La première colonne définit des types de séquences connues de l'homme du métier de la compression vidéo. Les autres colonnes correspondent, pour des pas de quantification différents autour du pas de quantification sélectionné pour la première passe, à des pertes de débit. Il s'agit de la différence de débit entre un codage deuxième passe ne mettant pas en cause le mode de codage de la première passe, c'est-à-dire utilisant le même mode de codage que celui de la première passe mais avec un pas de quantification (QP+1, QP-1....) différent de celui QP utilisé pour la première passe et un codage deuxième passe exploitant le meilleur mode de codage, c'est-à-dire remettant en cause la décision du mode de codage de la première passe, avec ce pas de quantification différent. Le codage première passe est supposé choisir le mode de codage le plus efficace pour un pas de quantification prédéfini QP.

On remarque qu'un changement du pas de quantification, même modeste, peut entraîner une perte de débit, ou de qualité d'image, significative. Par exemple pour la séquence auto, on augmente d'environ 7% le débit, par rapport à celui obtenu lors de la première passe, lorsque le pas de quantification est décrémenté.

| | QP -2 | QP -1 | QP +1 | QP +2 |
|---|---|---|---|---|
| *auto+* | 9,59 | 7,13 | 5,84 | 7,88 |
| *tennis+* | 8,4 | 5,6 | 4,91 | 7,75 |
| *bigdil+* | 5,1 | 4,22 | 4,39 | 5,89 |
| *defile* | 9,6 | 6,52 | 5,63 | 7,21 |

(suite)

| | QP -2 | QP -1 | QP +1 | QP +2 |
|---|---|---|---|---|
| *patin1* | 10,6 | 7,93 | 6,04 | 7,95 |
| *patin2* | 10,96 | 8,29 | 6,74 | 8,28 |
| *flower+* | 5,36 | 4,3 | 3,66 | 4,82 |
| *mobile+* | 5,45 | 4,07 | 3,13 | 4,28 |
| *fbal1+* | 7,79 | 5,97 | 5,21 | 7,04 |
| *girls* | 7,61 | 5,29 | 6,09 | 8,02 |
| *stefan* | 6,98 | 5,52 | 5,59 | 7,11 |
| **avr** | **7,95** | **5,89** | **5,20** | **6,93** |

## Exposé de l'invention

Un des buts de l'invention est de pallier les inconvénients précités. L'invention a pour objet un procédé de codage double passe d'une séquence d'images vidéo, le codage s'effectuant par macrobloc d'image selon une norme MPEG, un algorithme de régulation régulant le débit par modification d'un pas de quantification de coefficients transformés d'un bloc d'image, la première passe effectuant un calcul des meilleurs modes de codage, pour un pas de quantification calculé par un algorithme de régulation première passe, en minimisant un critère débit-distorsion, caractérisé en ce qu'il comprend les étapes suivantes :

- lors de la première passe, une mémorisation des M meilleurs modes de codage et de leurs paramètres de codage par macrobloc d'image,
- lors de la deuxième passe, un calcul, en fonction du nouveau pas de quantification déterminé par l'algorithme de régulation en fonction des paramètres mémorisés, parmi les M modes de codage mémorisés, du mode de codage minimisant le critère débit-distorsion, pour le sélectionner,
- un codage en fonction du mode de codage sélectionné.

Selon une mise en oeuvre particulière, la régulation s'effectue pour une quantité N d'images, N étant un entier naturel, ces images étant mémorisées pendant la durée du codage première passe.

Selon une mise en oeuvre particulière, les M meilleurs modes de codage mémorisés sont au moins les meilleurs modes de codage en mode inter, en mode intra, en mode sauté et en mode direct.

Selon une mise en oeuvre particulière, les paramètres mémorisés sont le pas de quantification, le coût de codage et la mesure de qualité.

Selon une mise en oeuvre particulière, le critère débit-distorsion est défini par la fonction distorsion :

$$J = D + \lambda R$$

avec :

- D, un paramètre de mesure de distorsion,
- R, un coût de codage,
- Lambda ($\lambda$), le paramètre lagrangien.

Selon une mise en oeuvre particulière, le paramètre de mesure de distorsion est la somme de la valeur absolue des différences ou SAD.

Selon une mise en oeuvre particulière, le paramètre lagrangien est défini par l'équation :

$$\lambda = 0.85 \times 2^{(QP-12)/3}$$

dans laquelle QP est le pas de quantification du macrobloc d'image.

Selon une mise en oeuvre particulière, le calcul du mode de codage minimisant le critère débit-distorsion consiste en une estimation du critère débit-distorsion effectuée en remplaçant le paramètre lagrangien par sa nouvelle valeur fonction du nouveau pas de quantification, les autres valeurs D et R étant celles obtenues lors de la première passe.

L'idée de l'invention est de recalculer les décisions de codage prises lors de la première passe en tenant compte du nouveau pas de quantification défini lors de cette première passe. Le procédé consiste, lors de la première passe, à stocker les M meilleures décisions, celles qui minimisent la fonction débit-distorsion, avec les informations de qualité et coût de chacune. Lors de la seconde passe, ces M décisions sont prises en compte pour choisir, en fonction du nouvel environnement et des nouvelles contraintes, la meilleure. La solution proposée permet une simplification par rapport à un codage double passe complet tout en apportant une amélioration de l'efficacité de codage par rapport à un codage double passe partiel tel que décrit plus haut. Les coûts et temps de calcul sont réduits car seuls les modes les plus efficaces de la première passe sont recalculés. D'autre part, une architecture double passe standard peut être utilisée. Le mode de codage est optimisé au niveau macrobloc, le taux de compression ou la qualité d'image est amélioré.

**Brève description des dessins**

D'autres particularités et avantages de l'invention apparaitront clairement dans la description suivante donnée à titre d'exemple non limitatif, et faite en regard des figures annexées qui représentent :

- la figure 1, un schéma de codage pour la première passe,
- la figure 2, un schéma de codage pour la deuxième passe.

**Description détaillée des modes de réalisation de l'invention**

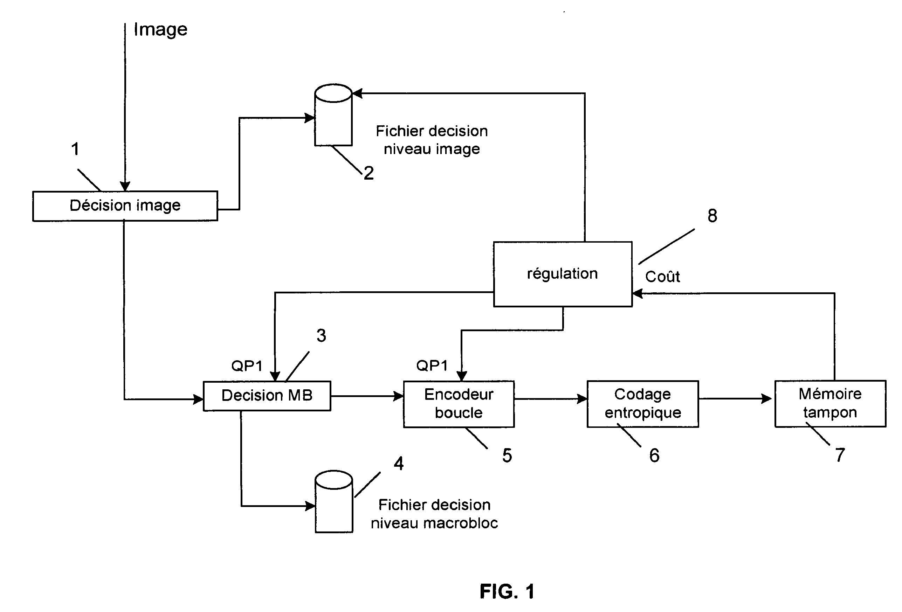

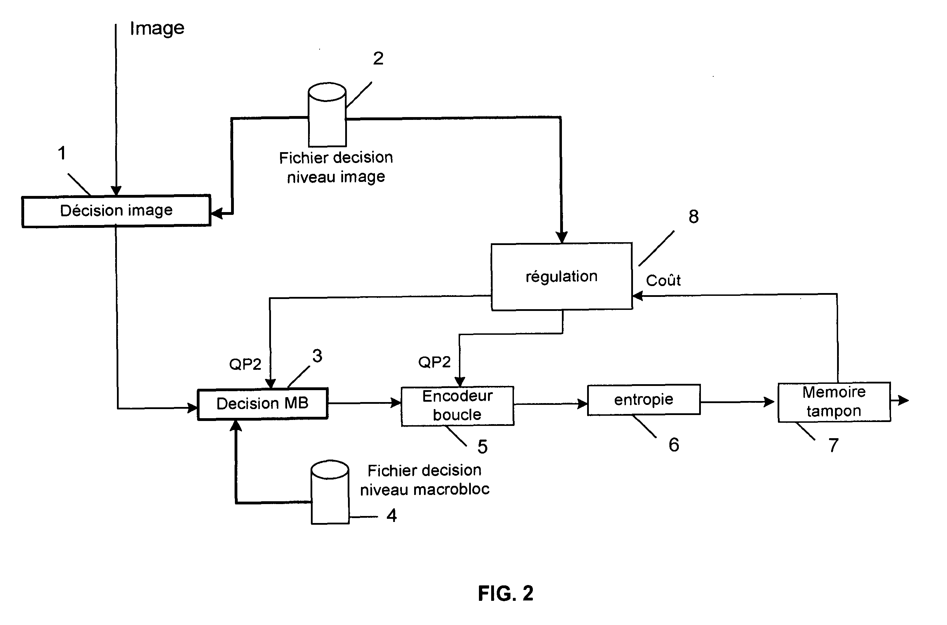

Les figures 1 et 2 représentent, de manière schématique, un codeur mettant en oeuvre les différentes étapes du procédé selon l'invention, la figure 1 correspondant au procédé lors de la première passe et la figure 2 correspondant au procédé lors de la deuxième passe.

Les images de la séquence d'images à comprimer sont transmises à l'entrée du dispositif relié à l'entrée d'un circuit de décision image référencé 1. Ce circuit effectue, entre autres, un choix de la structure de GOP, s'il est de structure variable. Il sélectionne le mode de codage de l'image, mode bi-trame ou mode trame et effectue le désentrelacement si nécessaire. Ces différents choix sont mémorisés dans une mémoire ou fichier de stockage de décision au niveau image, référencé 2, pour être exploités lors de la seconde passe.

L'image est ensuite transmise, macrobloc par macrobloc, à l'entrée d'un circuit de décision MB référencé 3. Ce circuit met en oeuvre les différents modes de codage intra et inter d'un macrobloc, pour décider du meilleur mode de codage. Dans la norme MPEG4 AVC, les modes intra sont relatifs aux blocs de taille 4x4, 8x8, 16x8, 8x16 et 16x16. Les modes de codage inter sont par exemple de type unidirectionnel, en prédiction anticipée ou différée, bidirectionnel, et prennent en compte une ou plusieurs images de référence. Dans une mode de réalisation particulier, le circuit de décision MB comprend un circuit de codage, de type MPEG, réalisant les codages dans les différents modes en effectuant les différents calculs d'estimation de mouvement, de reconstruction d'image, de prédiction...Le circuit de décision calcule, pour chaque mode, la fonction débit-distorsion et sélectionne les M modes de codage donnant les plus faibles valeurs qui sont alors mémorisés dans la mémoire ou fichier de stockage de décision au niveau macrobloc référencée 4, avec les informations de qualité et de coût attenantes. Ce stockage est effectué macrobloc par macrobloc. D'autres modes de décision peuvent être utilisés, exploitant ou pas les différentes étapes de codage MPEG. Il est par exemple possible d'exploiter la transformée de Hadamard, en calculant une SATD, acronyme de l'anglais « Sum of Absolute Transformed Differences » qui correspond à la somme de la valeur absolue des coefficients transformés de Hadamard des différences, différences entre le bloc source et le bloc prédit. Une simple SAD entre le bloc de pixels source et le bloc codé puis décodé peut être aussi calculée pour mesurer la qualité du bloc.

La procédure de calcul peut consister par exemple à découper le macrobloc en blocs de taille 8x8 et à calculer les vecteurs mouvement pour chacun de ces blocs puis à « remonter » aux blocs de tailles supérieures 8x16, 16x8, 16x16. Pour chacune des partitions, blocs 4x4, 8x8, 16x8, 8x16 et 16x16, un calcul en mode intra, inter est effectué, les valeurs du critère débit-distorsion, par exemple celles correspondant à l'équation 1, sont calculées. Sont mémorisées les meilleurs modes de codage pour ces partitions avec les paramètres correspondant tels que les vecteurs mouvement, images de référence...Les modes de codages « sauté », « direct » peuvent également être pris en compte. Les meilleurs modes au niveau du macrobloc sont calculés et mémorisés. Pour la mesure du coût, les entêtes, les vecteurs mouvement et les coefficients sont généralement pris en compte. Mais un calcul plus global et donc moins précis peut également être effectué, basé sur des méthodes estimatives, par exemple du type connu sous l'appellation « a priori ». De tels algorithmes « a priori » sont décrits dans le document de standardisation ITU-T Recommandation H.264.2, intitulé « Reference software for H. 264 advanced video coding ».

L'information relative au meilleur mode de codage est transmise avec le macrobloc de luminance à un encodeur boucle 5 qui effectue un codage selon la norme MPEG et selon ce meilleur mode. Il s'agit de manière connue, du codage inter ou intra réalisant une transformation cosinus discrète, une quantification, une reconstruction de l'image pour fournir une image prédite exploitée pour le codage en mode inter, un calcul de résidus... Le macrobloc de coefficients quantifiés sortant de l'encodeur boucle est transmis à un circuit d'encodage entropique 6 réalisant de manière connue un encodage à longueur variable de type VLC, acronyme de l'anglais Variable Length Coding. La sortie de ce codeur 6 est reliée à une mémoire tampon 7 dont le niveau de remplissage est lié au coût de codage des macroblocs. Cette information de niveau est transmise à un circuit de régulation 8 qui a pour principale tâche de calculer le pas de quantification que doit exploiter l'encodeur boucle 4, la variation du pas de quantification permettant la régulation. L'algorithme de régulation mis en oeuvre par le circuit de régulation compare le débit à la consigne et agit sur le pas de quantification pour réaliser cette régulation. Ce pas de quantification est donc transmis à l'encodeur boucle 5 mais également au circuit de décision de mode de codage 3 qui l'exploite pour optimiser la décision de mode de codage en fonction du pas de quantification. Le circuit de régulation fournit également les informations de pas de quantification, de coût par image, de complexité, de qualité d'image au fichier de stockage au niveau image 2 qui les mémorise pour chaque image.

La figure 2 représente ce même dispositif de codage exploité lors de la deuxième passe. Les mêmes numérotations sont prises.

Les images source sont transmises à l'entrée du dispositif pour être envoyées vers le circuit de décision image 1. Ces images source proviennent d'un circuit de mémorisation, non représenté sur la figure, qui mémorise dans une mémoire FIFO une quantité déterminée d'images sources pour les retransmettre au dispositif de codage lors de la seconde passe, avec un retard correspondant au nombre d'images mémorisées. Ce nombre peut correspondre à la taille d'un GOP, peut dépendre des contraintes applicatives, par exemple de l'encodeur de contribution.

Ces images peuvent être mémorisées, lors de la première passe, avec les paramètres de décision du mode de codage au niveau image, dans le fichier de stockage au niveau image 2. La deuxième passe est alors effectuée sur les données lues de ce fichier de stockage ou mémoire FIFO, données écrites lors de la première passe.

Les informations de décision image correspondant à l'image à traiter lors de cette seconde passe sont récupérées de ce fichier de stockage 2, informations telles que le type d'image, I, P ou B, le mode trame ou bitrame... par le circuit de décision image 1 qui transmet les macroblocs correspondant au type de codage de l'image au circuit de décision MB 3. Ce circuit récupère, du fichier de décision de mode de codage au niveau macrobloc 4, les meilleurs modes de codages avec leurs paramètres.

Les calculs sont effectués, lors de cette seconde passe, avec le nouveau pas de quantification fourni par le circuit de régulation 8. L'algorithme de régulation du circuit de régulation 8 est un algorithme de régulation deuxième passe. La régulation de débit est faite en fonction des informations mémorisées lors de la première passe, informations de pas de quantification, de coût par image, de complexité, de qualité d'image, de coût par macrobloc, de qualité du macrobloc...

Par exemple, alors que, lors de la première passe, l'algorithme de régulation pouvait se limiter à un calcul de pas de quantification en fonction de la consigne de débit, du coût de codage et de la qualité de l'image, cet autre algorithme de régulation deuxième passe peut exploiter les informations obtenues sur les images suivantes, lors de la première passe, pour ajuster le pas de quantification de l'image courante. Par exemple, un flash dans une séquence entraine une augmentation du coût de codage en supprimant la corrélation temporelle et donc entraîne, lors de la première passe, une augmentation du pas de quantification. Ce flash est pris en compte, sur le gop ou sur le nombre d'images sur lequel s'effectue la régulation, par exemple le nombre d'images pour lesquelles sont mémorisés les paramètres, pour répartir cette pointe de coût de codage sur l'ensemble de ces images, par exemple en augmentant le pas de quantification calculé pour les autres images et en le diminuant pour l'image coûteuse en codage, diminuant la qualité des autres images pour augmenter celle de l'image coûteuse en codage.

Ces variations de pas de quantification, par rapport à la première passe, comme indiqué plus haut, rendent non optimales les décisions de mode de codage prises lors de la première passe. Les modes de codage correspondant au meilleur codage en mode intra, au meilleur codage en mode inter bidirectionnel et mode inter directionnel, le mode sauté et le mode direct ont été mémorisés lors de la première passe et les paramètres relatifs à ces modes également. Ils sont maintenant récupérés du fichier de décision au niveau macrobloc 4 par le circuit de décision MB 3.

Plusieurs meilleurs modes de codage inter, intra ou autres ont pu être mémorisés. Pour chacun des M modes mémorisés, le circuit de décision de mode de codage effectue le calcul de la fonction débit-distorsion en prenant en compte le nouveau pas de quantification dont dépend $\lambda$ et en prenant également en compte les informations de coût et de qualité provenant du circuit de régulation 8. Le meilleur mode minimisant cette fonction débit-distorsion = D + $\lambda$ R, est sélectionné.

Le macrobloc est transmis, avec le mode de codage sélectionné, au circuit d'encodage boucle 5 qui réalise le codage effectif du macrobloc selon ce meilleur mode de codage sélectionné lors de cette deuxième passe. Les données codées en sortie de l'encodeur boucle 5 sont transmises au codeur entropique 6 et à la mémoire tampon 7 pour être disponibles en sortie du codeur. La mémoire tampon 7 transmet également les informations de niveau de remplissage au circuit de régulation 8 pour effectuer la régulation.

Le choix des meilleurs modes de codage n'est pas limitatif. Il peut s'agir du seul meilleur mode inter et meilleur mode intra ou du seul meilleur mode inter et meilleurs modes intra 4x4 et intra 8x8. Les modes spéciaux peuvent être pris en compte, mode direct, mode sauté...Il est ainsi possible, après modification du pas de quantification, que le mode sauté ou direct, peu coûteux, soit sélectionné à la place d'un mode inter ou intra. Le mode direct ou sauté, si choisi lors de la première passe, peut également être remis en cause lors de la seconde passe. En effet, le mode sauté, lorsqu'il est choisi lors de la première passe, peut être générateur de fortes distorsions dans l'image s'il est maintenu, un nouveau pas de quantification pouvant ne plus justifier le mode sauté, par exemple un pas de quantification plus faible ne rendant plus les coefficients de blocs nuls.

Le nombre de meilleurs modes de codage sélectionnés peut être limité à une valeur N prédéterminé ou peut être évolutif. Ce nombre peut être variable dynamiquement, en fonction par exemple de la complexité de calcul, notamment pour des implémentations logicielles temps réel.

Dans une première variante, la distorsion effective n'est pas recalculée. Elle est remplacée par une estimation du critère débit-distorsion à partir de la fonction mathématique, en remplaçant la valeur de lambda par celle correspondant au nouveau pas de quantification. La complexité des calculs est ainsi réduite. En d'autres termes, les valeurs R et D obtenues lors de la première passe sont exploitées pour le calcul du critère débit-distorsion et seul le paramètre lambda est mis à jour en fonction du nouveau pas de quantification, pour ce calcul.

Dans une deuxième variante, la première passe réalise une estimation de la critère débit-distorsion à partir d'un algorithme a priori et la deuxième passe effectue un calcul réel sur les quelques modes sélectionnés à partir d'un algorithme a posteriori.

Dans une troisième variante, le calcul de la décision MB de la deuxième passe prend également en compte les décisions de mode de codage pour des macroblocs voisins ou/et des macroblocs colocalisés. Les prévisions de codage peuvent être prises en compte pour des macroblocs suivants à coder. Ceci afin d'homogénéiser la structure de MB, les modes de codages, les paramètres de codage..., spatialement et dans le temps, et ainsi gagner en qualité subjective.

### Revendications

**1.** Procédé de codage double passe d'une séquence d'images vidéo, le codage s'effectuant par macrobloc d'image selon une norme MPEG, un algorithme de régulation régulant le débit par modification d'un pas de quantification de coefficients transformés d'un bloc d'image, la première passe effectuant un calcul des meilleurs modes de codage, pour un pas de quantification calculé par un algorithme de régulation première passe, en minimisant un critère débit-distorsion, **caractérisé en ce qu'**il comprend les étapes suivantes :

- lors de la première passe, une mémorisation (4) des M meilleurs modes de codage et de leurs paramètres de codage par macrobloc d'image,
- lors de la deuxième passe, un calcul (3), en fonction du nouveau pas de quantification déterminé par l'algorithme de régulation (8) en fonction des paramètres mémorisés, parmi les M modes de codage mémorisés (4), du mode de codage minimisant le critère débit-distorsion, pour le sélectionner,
- un codage (5) en fonction du mode de codage sélectionné.

**2.** Procédé selon la revendication 1, **caractérisé en ce que** la régulation s'effectue pour une quantité N d'images, N étant un entier naturel, ces images étant mémorisées pendant la durée du codage première passe.

**3.** Procédé selon la revendication 1, **caractérisé en ce que** les M meilleurs modes de codage mémorisés (4) sont au moins les meilleurs modes de codage en mode inter, en mode intra, en mode sauté et en mode direct.

**4.** Procédé selon la revendication 1, **caractérisé en ce que** les paramètres mémorisés (4) sont le pas de quantification, le coût de codage et la mesure de qualité.

**5.** Procédé selon la revendication 1, **caractérisé en ce que** le critère débit-distorsion est défini par la fonction distorsion :

$$J = D + \lambda R$$

avec :

- D, un paramètre de mesure de distorsion,
- R, un coût de codage,
- Lambda ($\lambda$), le paramètre lagrangien.

**6.** Procédé selon la revendication 5, **caractérisé en ce que** le paramètre de mesure de distorsion est la somme de la valeur absolue des différences ou SAD.

**7.** Procédé selon la revendication 5, **caractérisé en ce que** le paramètre lagrangien est défini par l'équation :

$$\lambda = 0.85 \times 2^{(QP-12)/3}$$

dans laquelle QP est le pas de quantification du macrobloc d'image.

**8.** Procédé selon la revendication 5, **caractérisé en ce que** le calcul (3) du mode de codage minimisant le critère débit-distorsion consiste en une estimation du critère débit-distorsion effectuée en remplaçant le paramètre lagrangien par sa nouvelle valeur fonction du nouveau pas de quantification, les autres valeurs D et R étant celles obtenues lors de la première passe.

**Claims**

**1.** Dual pass coding method for a video image sequence, the coding being carried out per image macroblock according to the MPEG standard, a regulating algorithm regulating the bitrate by modification of a quantization step of transform coefficients of an image block, the first pass carrying out the calculation of the best coding modes, for a quantization step calculated by a first pass regulating algorithm, while minimising a bitrate-distortion criterion, **characterized in that** it comprises the following steps:

- during the first pass, a memorization (4) of the M best coding modes and their coding parameters per image macroblock,
- during the second pass, a calculation (3), according to the new quantization step determined by the regulating algorithm (8) according to the parameters memorized, among the M coding modes memorized (4), of the coding mode minimising the bitrate-distortion criterion, to select it,
- a coding (5) according to the selected coding mode.

**2.** Method according to claim 1, **characterized in that** the regulation is carried out for a quantity N of images, N being a natural integer, these images being memorised during the duration of the first pass coding.

**3.** Method according to claim 1, **characterized in that** the M best coding modes memorised (4) are at least the best coding modes in inter mode, in intra mode, in skip mode and in direct mode.

**4.** Method according to claim 1, **characterized in that** the parameters memorised (4) are the quantization step, the coding cost and the measurement of quality.

**5.** Method according to claim 1, **characterized in that** the bitrate-distortion criterion is defined by the distortion function:

$$J = D + \lambda R$$

where:

- D, is a distortion measurement parameter,
- R, is a coding cost,
- Lambda ($\lambda$), is the Lagrangian parameter.

**6.** Method according to claim 5, **characterized in that** the distortion measurement parameter is the sum of the absolute value of differences or SAD.

**7.** Method according to claim 5, **characterized in that** the Lagrangian parameter is defined by the equation:

$$\lambda = 0.85 \times 2^{(QP-12)/3}$$

in which QP is the quantization step of the image macroblock.

**8.** Method according to claim 5, **characterized in that** the calculation (3) of the coding mode minimising the bitrate-distortion criterion consists in an estimation of the bitrate-distortion criterion carried out by replacing the Lagrangian parameter with its new value according to the new quantization step, the other values D and R being those obtained during the first pass.

**Patentansprüche**

1. Verfahren zur Zweifachdurchlauf-Kodierung einer Sequenz von Videobildern, wobei die Kodierung durch einen Bildmakroblock nach einem MPEG-Standard erfolgt, wobei ein Regelalgorithmus die Rate durch Änderung eines Quantisierungsschritts von transformierten Koeffizienten eines Bildblocks regelt, wobei in dem ersten Durchlauf für einen Quantisierungsschritt, der durch einen Erstdurchlauf-Regelalgorithmus berechnet wird, eine Berechnung der besten Kodierungsmodi erfolgt, indem ein Rate-Verzerrungs-Kriterium minimiert wird, **dadurch gekennzeichnet, dass** es die folgenden Schritte umfasst:

   - eine Speicherung (4) der M besten Kodierungsmodi und deren Kodierungsparameter je Bildmakroblock bei dem ersten Durchlauf;
   - eine Berechnung (3) des Kodierungsmodus, der das Rate-Verzerrungs-Kriterium minimiert, um diesen auszuwählen, wobei die Berechnung in Abhängigkeit von dem neuen Quantisierungsschritt, der durch den Regelalgorithmus (8) in Abhängigkeit von den gespeicherten Parametern bestimmt wird, bei dem zweiten Durchlauf unter den M gespeicherten Kodierungsmodi (4) erfolgt,
   - eine Kodierung (5) in Abhängigkeit von dem ausgewählten Kodierungsmodus.

2. Verfahren nach Anspruch 1, **dadurch gekennzeichnet, dass** die Regelung für eine Menge N von Bildern erfolgt, wobei N eine natürliche Ganzzahl ist, wobei diese Bilder während der Dauer der Erstdurchlauf-Kodierung gespeichert werden.

3. Verfahren nach Anspruch 1, **dadurch gekennzeichnet, dass** die M besten gespeicherten Kodierungsmodi (4) zumindest die besten Kodierungsmodi im Intermodus, im Intramodus, im Skipmodus und im Direktmodus sind.

4. Verfahren nach Anspruch 1, **dadurch gekennzeichnet, dass** es sich bei den gespeicherten Parametern (4) um den Quantisierungsschritt, die Kodierungskosten und das Qualitätsmaß handelt.

5. Verfahren nach Anspruch 1, **dadurch gekennzeichnet, dass** das Rate-Verzerrungs-Kriterium durch die Verzerrungsfunktion
J = D + λR bestimmt ist, wobei

   - D ein Parameter des Verzerrungsmaßes ist,

   - R Kodierungskosten darstellt und
   - Lambda (λ) der Lagrange-Parameter ist.

6. Verfahren nach Anspruch 5, **dadurch gekennzeichnet, dass** es sich bei dem Parameter des Verzerrungsmaßes um die Summe des Betrags der Differenzen bzw. SAD handelt.

7. Verfahren nach Anspruch 5, **dadurch gekennzeichnet, dass** der Lagrange-Parameter sich zu

$$\lambda = 0.85 \times 2^{(QP-12)/3}$$

ergibt, wobei in dieser Gleichung QP der Quantisierungsschritt des Bildmakroblocks ist.

8. Verfahren nach Anspruch 5, **dadurch gekennzeichnet, dass** die Berechnung (3) des Kodierungsmodus, der das Rate-Verzerrungs-Kriterium minimiert, in einer Schätzung des Rate-Verzerrungs-Kriteriums besteht, welche durch Ersetzen des Lagrange-Parameters durch seinen neuen, von dem neuen Quantisierungsschritt abhängigen Wert erfolgt, wobei die anderen Werte D und R diejenigen sind, die sich im ersten Durchlauf ergeben.

FIG. 1

FIG. 2

EP 2 225 888 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MINQIANG JIANG et al.** On Lagrange multiplier and quantizer adjustment for H.264 frame-layer video rate control. *IEEE TRANSACTIONS ON CIRCUITS AND SYSTEMS FOR VIDEO TECHNOLOGY IEEE USA,* Mai 2006, vol. 16 (5), ISSN 1051-8215, 663-669